# EUROPEAN PATENT SPECIFICATION

(11) **EP 0 531 267 B1**
(45) Date of publication and mention of the grant of the patent: **15.11.1995**
(21) Application number: 92850180.8
(22) Date of filing: 24.07.1992
(51) Int. Cl.: H02K 9/19

(54) **Motor cooling device**
Motorkühlungsvorrichtung
Dispositif de refroidissement pour moteur

(30) Priority: 03.09.1991 SE 9102517
(43) Date of publication of application: 10.03.1993
(73) Proprietor: ITT Flygt Aktiebolag, S-171 25 Solna (SE)
(72) Inventor: Brandt, Bengt Ake, S-172 38 Sundbyberg (SE)
(74) Representative: Larsson, Sten

(56) References cited:
- EP-A- 0 013 869
- DE-A- 3 237 967
- FR-A- 2 497 019

## Description

The invention concerns a design of the internal cooling system in a centrifugal pump for pumping of liquids containing solid pollutions.

A common pump type is the so-called submersible pump where the pump and an electric motor as a unit is submersed in the pumped medium, the motor normally obtaining its cooling directly from the surrounding, pumped medium. If however, the level of the liquid decreases such that the motor is surrounded by air, the cooling may be insufficient and therefore the motor is often provided with an internal cooling system where the pumped medium is used. An example of such a solution is shown in the Swedish Patent No 367 465.

As the pumped medium often contains pollutions, said patent suggests a narrow slot to be arranged between the impeller and the pump housing through which comparatively clean water is fed into the cooling water room between the pump and the motor, where the water is circulated by help of vanes at the back of the impeller. The slot prevents pollutions from going into the cooling water room thus diminishing the risks for clogging of the cooling channels around the motor.

According to a further development of subject patent, vanes are arranged within the cooling jacket which transport the cooling liquid a distance upwards thus obtaining a cooling of the entire motor.

Because of the development towards bigger and stronger motors, the demand for good cooling has been increased and the cooling obtained by the means known today is not always sufficient. This depends on the fact that it is difficult for the cooling liquid to reach the upper part of the motor because of pollutions being sedimented in the passages. In addition, the motor is also often expected to be able to operate at a relatively low speed, which means that it could be difficult to obtain sufficient circulation speed for the cooling liquid without large and energy demanding back vanes. To solve this problem it has been suggested to transport cooling liquid to the-top of the motor in outwardly arranged pipes, the liquid then flowing down between the stator and a surrounding cooling jacket. The main disadvantage with this solution is that the outside pipes are expensive and may easily get damaged when the pump is handled during rough conditions.

Another solution which has been tested is to arrange the pipes for the cooling liquid integrated in the motor housing. To secure that the pipes then will not disturb the circular flow around the stator, it is a condition that the stator housing is provided with longitudinal ridges for the pipes. Said ridges however, disturb the symmetry and mean that a considerably thicker material must be used in the motor housing to make it stand the pressure load. Tests have shown that a housing designed in this way demands a three times thicker material as compared with a circular housing to be able to stand an equal internal over pressure.

According to the invention a solution has been obtained where a space for pipes for cooling liquid as well as air exhaust are arranged within the housing without disturbing the flow around the motor. The device is stated in the claims and is more closely described below with reference to the enclosed drawings.

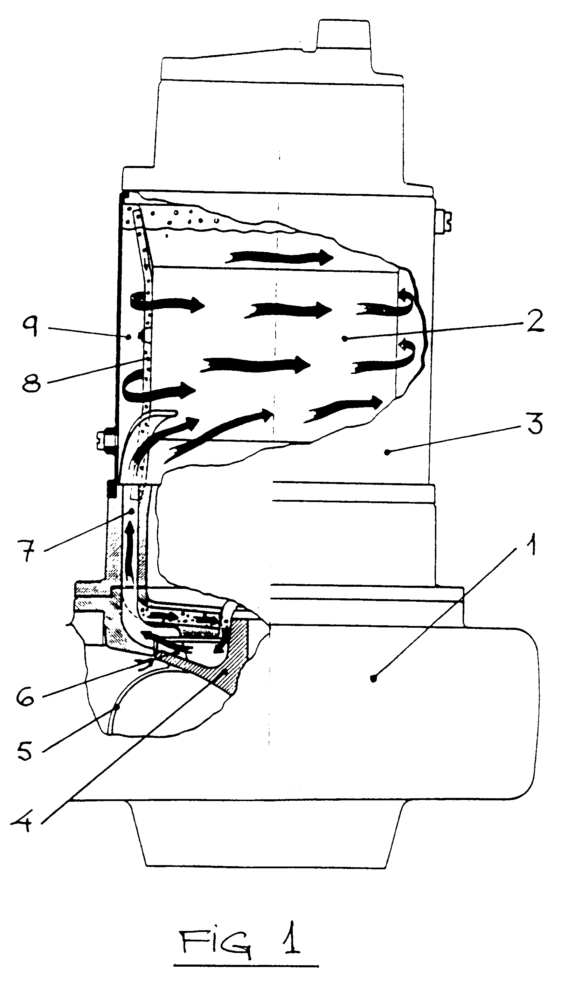

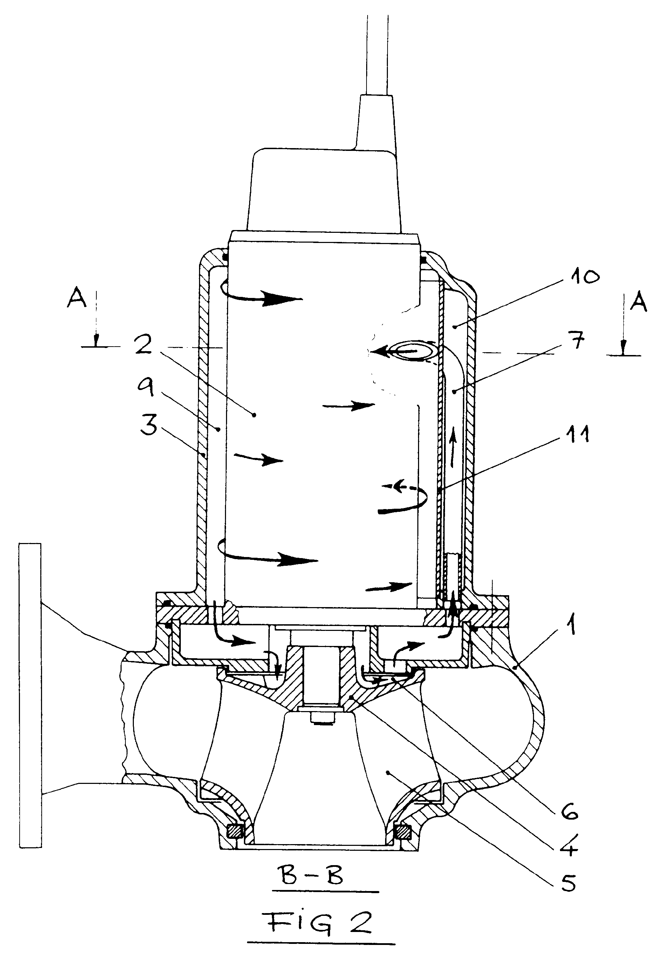

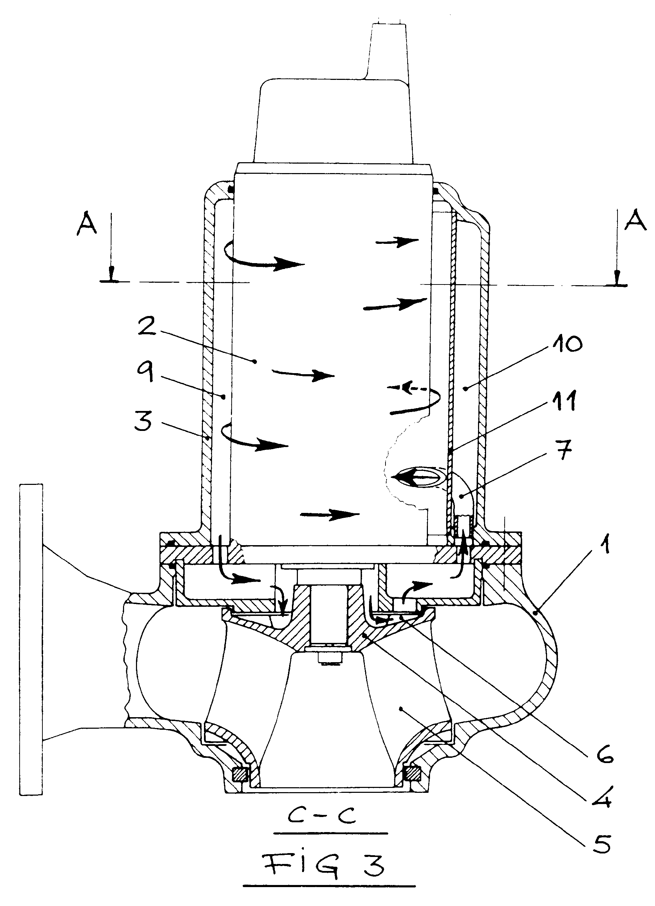

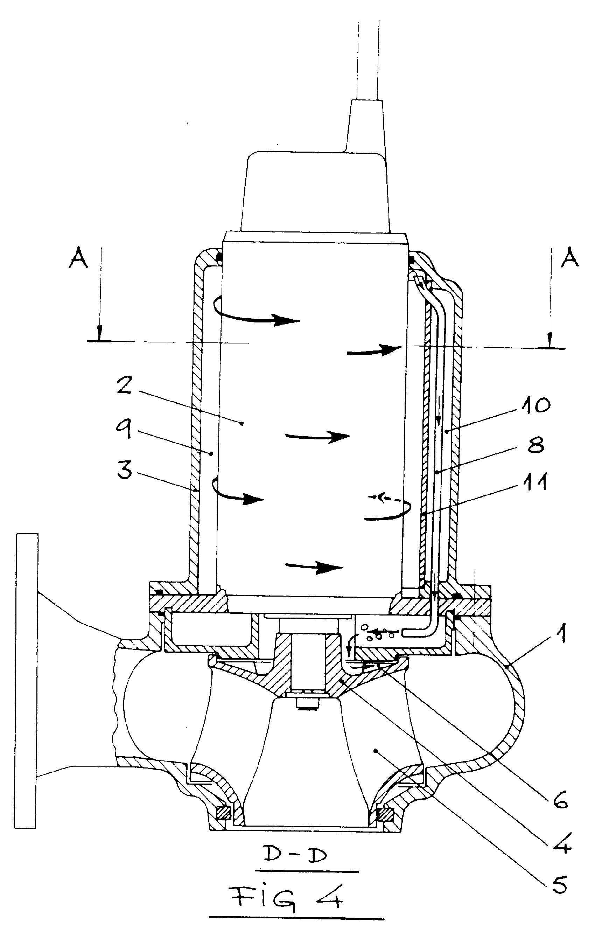

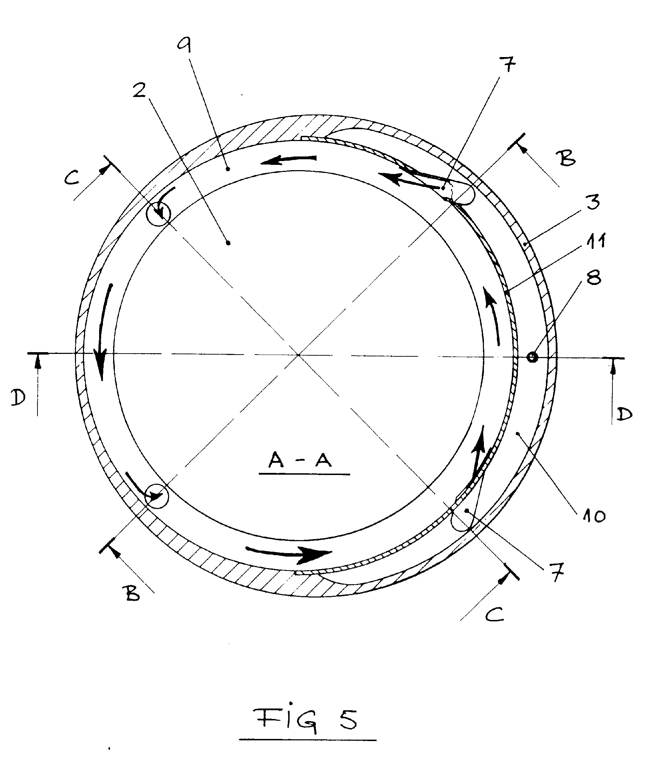

Fig 1 shows the principle for a cooling system according to the invention, while Figs 2 to 5 show a cut through an electric motor and its surrounding housing.

In the drawings 1 stands for a pump housing, 2 the stator in an electric motor having a surrounding cylinder formed jacket 3. 4 stands for an impeller with main vanes 5 and back vanes 6. 7 stands for a transportation pipe for cooling liquid and 8 an exhaust pipe. Further 9 stands for a slot between, the stator 2 and the jacket 3 and finally 10 a lateral space separated by a non pressure absorbing wall 11.

As is shown in Fig 1, cooling liquid is pumped from the pump housing at the lower end of the motor upwards through one or several pipes 7 at the circumference. The liquid is then forced to describe a circular movement within the slot 9 on its way back to the impeller 4, thus obtaining an effective cooling. In the drawing there is also shown an exhaust pipe for transport of air bubbles which may occur in the cooling liquid at pump start.

In order to obtain an effective cooling it is important that the slot between the stator 2 and the casing 3 is free of protruding parts which may be a hinderance to the flow and cause risk for sedimentation of possible pollutions. In order to create a space, adjacent to the flow where transportation pipes and exhaust pipes can be located, the invention provides for the stator to be arranged eccentrically of the casing 3.

As is shown in Figs 2 to 5 one or several transportation pipes 7 and exhaust pipes 8 are arranged within the space 10 which is created by the eccentric arrangement of the stator, meaning that the circular flow will not be disturbed. A sheet metal 11 separates the space 10 and creates an even slot 9 around the stator 2. The outlets of the transportation pipes 7 are preferably tangentially directed to initiate the circulating return flow.

By help of the invention a device is obtained which considerably increases the cooling efficiency in a submersible water proof encased motor. The invention means that considerably higher motors can be built, without risking cooling problems. Sometimes it might be suitable to arrange several transportation pipes 7 for the cooling liquid ending at different levels. The design with a stator eccentrically arranged with relation to the casing allows several such pipes without any hinderance to the circulation.

## Claims

1. A device for cooling a water proof encased electric motor, such as a pump motor, which normally operates with its driving shaft vertically directed and where cooling liquid is transported from an impeller (4) situated at the lower end of the motor in the direction of the upper end of the motor, the liquid then being brought back to the lower end during circulation around the motor within a slot between its stator (2) and the surrounding casing (3), characterized in that the stator (2) is arranged eccentrically with reference to the surrounding casing (3) along most of its extension, thus obtaining a wider slot along a part of the circumference between the stator (2) and the casing (3), said space being utilized for placing of transportation pipes (7) for the cooling liquid and possible exhaust pipes (8), said pipes then being of no disturbance to the circular return flow around the stator (2).

2. A device according to claim 1, characterized in that a wall (11) formed like a segment of a circle is arranged which delimits the space (10) for the pipes (7), (8) thus obtaining a slot around the stator (2) which has an essentially even width along the entire turn.

3. A device according to claim 1, characterized in that several cooling liquid pipes are arranged ending at different levels.

4. A device according to claim 1, characterized in that the outlet of a cooling liquid pipe (7) is tangentially directed.

## Patentansprüche

1. Vorrichtung zum Kühlen eines wasserdicht umschlossenen Elektromotors, beispielsweise eines Pumpenmotors, der normalerweise arbeitet, während seine Antriebswelle vertikal orientiert ist, wobei Kühlflüssigkeit von einem am unteren Ende des Motors gelegenen Pumpenrad (4) in Richtung des oberen Endes des Motors transportiert wird, die Flüssigkeit anschließend zum unteren Ende während der Zirkulation um den Motor im Inneren eines Schlitzes zwischen dessen Stator (2) und dem umgebenden Gehäuse (3) zurückgeführt wird,
**dadurch gekennzeichnet,** daß der Stator (2) exzentrisch bezüglich des umgebenden Gehäuses (3) entlang des größten Teils seiner Erstreckung angeordnet ist, um dadurch entlang eines Teils des Umfangs einen breiteren Schlitz zwischen dem Stator (2) und dem Gehäuse (3) zu erhalten, wobei der Raum genutzt wird zur Unterbringung von Förderrohren (7) für die Kühlflüssigkeit und möglichen Abführrohren (8), wobei die Rohre dann keinerlei Störung für den kreisförmigen Rückstrom um den Stator (2) herum darstellen.

2. Vorrichtung nach Anspruch 1,
**dadurch gekennzeichnet,** daß eine kreissegmentähnliche Wand (11) angeordnet ist, die den Raum (10) für die Rohre (7, 8) begrenzt, wodurch ein Schlitz um den Stator (2) herum erhalten wird, der über die gesamte Wendung eine im wesentlichen gleiche Breite aufweist.

3. Vorrichtung nach Anspruch 1,
**dadurch gekennzeichnet,** daß mehrere Kühlflüssigkeitsrohre so angeordnet sind, daß sie in verschiedenen Höhen enden.

4. Vorrichtung nach Anspruch 1,
**dadurch gekennzeichnet,** daß der Auslaß eines Kühlflüssigkeitsrohrs (7) tangential gerichtet ist.

## Revendications

1. Dispositif de refroidissement d'un moteur électrique étanche à l'eau logé dans un boîtier, tel qu'un moteur de pompe, ce moteur fonctionnant norma lement avec son arbre d'entraînement dirigé verticalement, du liquide de refroidissement étant transporté à partir d'un rotor (4) disposé à l'extrémité inférieure du moteur dans la direction de l'extrémité supérieure du moteur, le liquide étant ensuite renvoyé vers l'extrémité inférieure pendant la circulation autour du moteur à l'intérieur d'une fente entre son stator (2) et le boîtier l'entourant (3), caractérisé en ce que le stator (2) est agencé de façon excentrique par rapport au boîtier l'entourant suivant une majeure partie de son extension, de manière à obtenir une fente qui est plus large le long d'une partie de la circonférence entre le stator (2) et le boîtier (3), cet espace étant utilisé pour la mise en place de conduits (7) de transport de liquide de refroidissement et d'éventuels conduits (8) de refoulement, ces conduits ne perturbant pas ainsi le retour circulaire de l'écoulement autour du stator (2).

2. Dispositif selon la revendication 1, caractérisé en ce qu'une paroi (11) formée comme un segment d'un cercle est agencée de manière à délimiter l'espace (10) pour les conduits (7, 8) de manière à obtenir une fente entourant le stator (2) qui a une largeur essentiellement régulière tout le long d'un tour.

3. Dispositif selon la revendication 1, caractérisé en ce que plusieurs conduits de liquide de refroidissement sont agencés de manière à se terminer à différents niveaux.

4. Dispositif selon la revendication 1, caractérisé en ce que les sorties des conduits (7) de liquide de refroidissement sont dirigées de façon tangentielle.
